# EUROPÄISCHE PATENTSCHRIFT

(11) **EP 4 033 083 B1**
(45) Veröffentlichungstag und Bekanntmachung des Hinweises auf die Patenterteilung: **29.01.2025**
(21) Anmeldenummer: 21213002.5
(22) Anmeldetag: 08.12.2021
(51) Int. Cl.: F02D 9/06, F16D 3/06, F16D 3/10, F16D 3/12, F16K 1/22, F16K 31/04

(54) **KOPPLUNGSANORDNUNG**
COUPLING ARRANGEMENT
AGENCEMENT D'ACCOUPLEMENT

(30) Priorität: 20.01.2021 DE 102021101134
(43) Veröffentlichungstag der Anmeldung: 27.07.2022
(73) Patentinhaber: Purem GmbH, 66539 Neunkirchen (DE)
(72) Erfinder: Grün, Matthias, Altbach (DE); Birgler, Markus, Wernau (DE); Lory, Markus, Stuttgart (DE); Wacker, Andreas, Plochingen (DE); Zeumer, Annika, Wernau (DE); Schenk, Ralph, Stuttgart (DE); Novosel, Miljenko, Stuttgart (DE)
(74) Vertreter: Ruttensperger Lachnit Trossin Gomoll

(56) Entgegenhaltungen:
- EP-A1- 3 865 696
- DE-A1- 102013 103 105
- DE-C5- 102011 107 088

## Beschreibung

Die vorliegende Erfindung betrifft eine Kopplungsanordnung zur Kopplung einer Antriebswelle eines Schwenkantriebs einer Abgasklappe für den Abgasstrom einer Brennkraftmaschine mit einer um eine Schwenkachse drehbaren, eine Klappenblende tragenden Schwenkwelle.

Eine derartige Kopplungsanordnung ist aus der DE 10 2015 202 211 B4 bekannt. Bei dieser bekannten Kopplungsanordnung weist das mit der Schwenkwelle zur gemeinsamen Drehung gekoppelte Kopplungselement, ausgehend von dem an die Schwenkwelle angekoppelten Kopplungsbereich desselben, zwei im Wesentlichen axial auf den Schwenkantrieb zu sich erstreckende Drehkopplungsarme auf. In jedem dieser Drehkopplungsarme ist durch eine lochartige Drehkopplungsöffnung eine Drehkopplungsaussparung bereitgestellt. Von einem Kopplungsbereich des mit dem Antriebsorgan des Schwenkantriebs zur gemeinsamen Drehung gekoppelten Kopplungselements erstrecken sich zwei Drehkopplungsvorsprünge nach radial außen und greifen in die lochartigen Drehkopplungsöffnungen des an die Schwenkwelle angekoppelten Kopplungselements ein. Die in den Drehkopplungsarmen gebildeten, lochartigen Drehkopplungsöffnungen sind umfangsmäßig vollständig geschlossen, so dass diese insbesondere auch in Richtung auf das mit dem Schwenkantrieb gekoppelte Kopplungselement zu geschlossen sind und somit die in diese eingreifenden Drehkopplungsvorsprünge axial hintergreifen. Somit ist das die beiden Drehkopplungsvorsprünge aufweisende Kopplungselement unmittelbar an dem die beiden Drehkopplungsöffnungen aufweisenden Kopplungselement axial und rotatorisch begrenzt bewegbar angeordnet, so dass durch den unmittelbar durch die beiden Kopplungselemente bereitgestellten bzw. unmittelbar zwischen diesen wirkenden axialen Formschluss die beiden Kopplungselemente verliersicher aneinander gehalten sind, da die Drehkopplungsvorsprünge sich axial nicht aus den diese aufnehmenden Drehkopplungsöffnungen herausbewegen können.

Aus der DE 10 2013 103 105 A1 ist eine Kopplungsanordnung gemäß dem Oberbegriff des Anspruchs 1 bekannt. Zwischen einem mit einem Antriebsorgan drehfest gekoppelten Kopplungselement und einem an einer Schwenkwelle einer Abgasklappe festgelegten Kopplungselement wirkt eine die beiden Kopplungselemente axial voneinander weg und in Umfangsrichtung bezüglich einander beaufschlagende Vorspannfeder. Zur Drehkopplung der beiden Kopplungsorgane weist das mit dem Antriebsorgan drehfest gekoppelte Kopplungselement zwei Drehkopplungsaussparungen auf, in welche jeweils ein an dem an der Schwenkwelle festgelegten Kopplungselement vorgesehener Drehkopplungsvorsprung eingreift.

Es ist die Aufgabe der vorliegenden Erfindung, eine Kopplungsanordnung vorzusehen, welche bei einfachem Aufbau und einfacher Herstellbarkeit eine verliersichere Halterung zweier Kopplungselemente derselben aneinander gewährleistet.

Erfindungsgemäß wird diese Aufgabe gelöst durch eine Kopplungsanordnung zur Drehkopplung eines Antriebsorgans eines Schwenkantriebs einer Abgasklappe für den Abgasstrom einer Brennkraftmaschine mit einer um eine Schwenkachse drehbaren Schwenkwelle gemäß Anspruch 1.

Diese Kopplungsanordnung umfasst:
- ein erstes Kopplungselement mit einem mit einer Schwenkwelle zur gemeinsamen Drehung um die Schwenkachse zu koppelnden Kopplungsbereich,
- ein zweites Kopplungselement mit einem mit einem Antriebsorgan zur gemeinsamen Drehung um die Schwenkachse zu koppelnden Kopplungsbereich,
- ein Vorspannorgan zum Erzeugen einer das erste Kopplungselement und das zweite Kopplungselement im Wesentlichen in Umfangsrichtung bezüglich einander beaufschlagenden Kraft und zum Erzeugen einer in axialer Richtung wirkenden Kraft zwischen dem ersten Kopplungselement und dem zweiten Kopplungselement,
wobei ein Kopplungselement von erstem Kopplungselement und zweitem Kopplungselement wenigstens zwei nach radial außen sich erstreckende Drehkopplungsvorsprünge umfasst und das andere Kopplungselement von erstem Kopplungselement und zweitem Kopplungselement in Zuordnung zu jedem Drehkopplungsvorsprung des einen Kopplungselements eine den Drehkopplungsvorsprung aufnehmende Drehkopplungsaussparung umfasst.

Jede Drehkopplungsaussparung ist axial in Richtung von dem Kopplungsbereich des anderen Kopplungselements weg offen. Das eine Kopplungselement ist durch das Vorspannorgan gegen Herausbewegen der Drehkopplungsvorsprünge aus den diese aufnehmenden Drehkopplungsaussparungen an dem anderen Kopplungselement axial gehalten.

Bei dem erfindungsgemäßen Aufbau einer Kopplungsanordnung wird die Haltewirkung der beiden Kopplungselemente aneinander nicht durch einen unmittelbar zwischen diesen wirkenden Formschluss erreicht, sondern dadurch, dass die beiden Kopplungselemente durch das zwischen diesen wirkende Vorspannorgan aneinander gehalten sind. Das Vorspannorgan gewährleistet, dass die in die Drehkopplungsaussparungen eingreifenden, grundsätzlich aber axial aus diesen heraus bewegbaren Drehkopplungsvorsprünge in den Drehkopplungsaussparungen gehalten werden, auch wenn die Kopplungsanordnung nicht zwischen den durch diese zur gemeinsamen Drehung zu koppelnden Baugruppen axial eingespannt gehalten ist. Dies vereinfacht den Herstellungsvorgang der Kopplungsanordnung wesentlich, da jedes der Kopplungselemente bereits vor dem Zusammenfügen mit dem anderen Kopplungselement insbesondere in demjenigen Bereich, in welchem Drehkopplungsvorsprünge bzw. Drehkopplungsaussparungen gebildet sind, in der für den Zusammenbauzustand vorzusehenden Formgebung bereitgestellt werden kann und nicht, wie dies bei dem eingangs angeführten Stand der Technik der Fall ist, eines der Kopplungselemente verformt werden muss, um dadurch den für die Verliersicherung erforderlichen, unmittelbar zwischen den Kopplungselementen wirkenden Formschluss zu erzeugen.

Um zu gewährleisten, dass auch in dem Zustand, in welchem die Kopplungsanordnung nicht zwischen den durch diese zu koppelnden Baugruppen axial eingespannt ist, die beiden Kopplungselemente in definierter Positionierung aneinander gehalten sind, wird vorgeschlagen, dass bei axial im Wesentlichen vollständig entspanntem Vorspannorgan die Drehkopplungsvorsprünge in die diesen zugeordneten Drehkopplungsaussparungen eingreifend positioniert sind.

Zum Erreichen einer in Umfangsrichtung gleichmäßigen Verteilung der zu übertragenden Drehkräfte können an dem einen Kopplungselement zwei bezüglich der Schwenkachse sich im Wesentlichen diametral voneinander weg erstreckende Drehkopplungsvorsprünge vorgesehen sein.

Ferner können die Drehkopplungsvorsprünge sich von dem Kopplungsbereich des einen Kopplungselements nach radial außen erstrecken.

Der Kopplungsbereich des beispielsweise als Blechbauteil bereitgestellten einen Kopplungselements kann zum Erhalt eines einfach zu realisierenden Aufbaus im Wesentlichen plattenartig ausgebildet sein.

Bei einer einfach zu realisierenden Ausgestaltung können an dem anderen Kopplungselement zum Bereitstellen einer jeweiligen Drehkopplungsaussparung zwei in Richtung von dem Kopplungsbereich des anderen Kopplungselements sich im Wesentlichen axial weg erstreckende, eine in Richtung von dem Kopplungsbereich des anderen Kopplungselements weg axial offene Drehkopplungsaussparung zwischen sich begrenzende Drehkopplungsfinger vorgesehen sein. Dabei kann diese Struktur in einfacher Weise auch dadurch erreicht werden, dass auch das andere Kopplungselement als Blechbauteil bereitgestellt ist.

Für eine stabile Ausgestaltung kann an dem anderen Kopplungselement zum Bereitstellen einer jeweiligen Drehkopplungsaussparung ein von dem Kopplungsbereich des anderen Kopplungselements sich im Wesentlichen axial weg erstreckender und zwei Drehkopplungsfinger aufweisender Drehkopplungsarm vorgesehen sein.

Für einen geringen Wärmeübertrag zwischen dem Kopplungsbereich des anderen Kopplungselements und den Drehkopplungsarmen kann in dem Kopplungsbereich des anderen Kopplungselements in Zuordnung zu wenigstens einem, vorzugsweise jedem Drehkopplungsarm eine vorzugsweise T-förmige oder/und auf den zugeordneten Drehkopplungsarm sich zu erstreckende Aussparung ausgebildet sein.

Auch der Kopplungsbereich des anderen Kopplungselements kann im Wesentlichen plattenartig ausgebildet sein.

Um die axial und in Umfangsrichtung wirkenden Kräfte zwischen den beiden Kopplungselementen in einfacher Weise erzeugen zu können, wird vorgeschlagen, dass das Vorspannorgan eine Vorspannfeder mit einem bezüglich des ersten Kopplungselements wenigstens in einer ersten Umfangsrichtung und wenigstens axial in Richtung auf das zweite Kopplungselement zu abgestützten ersten Abstützbereich und einem bezüglich des zweiten Kopplungselements wenigstens in einer der ersten Umfangsrichtung entgegengesetzten zweiten Umfangsrichtung und wenigstens axial in Richtung auf das erste Kopplungselement zu abgestützten zweiten Abstützbereich umfasst.

Dabei kann ein definierter Zusammenhalt der Vorspannfeder mit den beiden Kopplungselementen dadurch erreicht werden, dass der erste Abstützbereich einen von einem Haltebereich des ersten Kopplungselements axial und in Umfangsrichtung übergriffenen Halteschenkel der Vorspannfeder umfasst, oder/und dass der zweite Abstützbereich eine von einem Haltebereich des zweiten Kopplungselements axial und in Umfangsrichtung übergriffenen Halteschenkel der Vorspannfeder umfasst.

Für eine stabile Halterung der Vorspannfeder an den Kopplungselementen kann der Haltebereich des ersten Kopplungselements an einem Außenumfangsbereich des Kopplungsbereichs des ersten Kopplungselements eine axial und in Umfangsrichtung abgekrümmt sich erstreckende Haltelasche umfassen, oder/und kann der Haltebereich des Kopplungsbereichs des zweiten Kopplungselements an einem Außenumfangsbereich des Kopplungsbereichs des zweiten Kopplungselements eine axial und in Umfangsrichtung abgekrümmt sich erstreckende Haltelasche umfassen.

Um in Wechselwirkung mit den beiden Kopplungselementen die Vorspannfeder axial und in Umfangsrichtung jeweils zum Erzeugen der Umfangsvorspannung bzw. des axialen Zusammenhalts halten zu können, wird vorgeschlagen, dass die Haltelasche am Kopplungsbereich des ersten Kopplungselements axial und in Umfangsrichtung im Wesentlichen entgegengesetzt zur Haltelasche am Kopplungsbereich des zweiten Kopplungselements abgekrümmt ist.

Bei einer zuverlässig wirkenden, baulich einfach zu realisierenden Ausgestaltung kann die Vorspannfeder eine Schraubenfeder sein, und jeder Halteschenkel kann durch einen im Wesentlichen nach radial außen sich erstreckenden Windungsendbereich der Vorspannfeder bereitgestellt sein.

Für eine zur Übertragung der Drehkräfte erforderliche Umfangsabstützung der beiden Kopplungselemente aneinander kann an jedem Drehkopplungsvorsprung ein Umfangsabstützbereich vorgesehen sein, und jede Drehkopplungsaussparung kann in Umfangsrichtung durch einen Gegen-Umfangsabstützbereich begrenzt sein, wobei der Umfangsabstützbereich jedes in einer Drehkopplungsaussparung aufgenommenen Drehkopplungsvorsprungs durch das Vorspannorgan in Anlage an dem Gegen-Umfangsabstützbereich der einen jeweiligen Drehkopplungsvorsprung aufnehmenden Drehkopplungsaussparung vorgespannt ist.

Zum Erreichen einer definierten Positionierung der beiden Kopplungselemente bezüglich einander im Wesentlichen quer zur Schwenkachse kann an dem anderen Kopplungselement in Zuordnung zu wenigstens einem Drehkopplungsvorsprung in Umfangsrichtung an wenigstens einer Seite des Drehkopplungsvorsprungs ein das eine Kopplungselement im Wesentlichen radial bezüglich des anderen Kopplungselements abstützender Radialabstützbereich vorgesehen sein.

Für eine einfach zu realisierende, gleichwohl jedoch eine definierte Positionierung gewährleistende Ankopplung an die miteinander zu koppelnden Baugruppen wird vorgeschlagen der Kopplungsbereich des ersten Kopplungselements eine Formschluss-Eingriffsformation zur Drehkopplung mit der Schwenkwelle aufweist, oder/und dass der Kopplungsbereich des zweiten Kopplungselements eine Formschluss-Eingriffsformation zur Drehkopplung mit dem Antriebsorgan aufweist. Alternativ oder zusätzlich kann zumindest eines der Kopplungselemente an die damit zu koppelnde Baugruppe durch Reibschluss, beispielsweise Presspassung, oder/und durch Materialschluss, beispielsweise Verschweißung, angekoppelt sein.

Die Erfindung betrifft ferner Abgasklappe, insbesondere für den Abgasstrom einer Brennkraftmaschine, umfassend eine im Inneren eines Klappenrohrs an einer um eine Schwenkachse drehbaren Schwenkwelle getragene Klappenblende sowie einen Schwenkantrieb mit einem Antriebsorgan, ferner umfassend eine erfindungsgemäß aufgebaute Kopplungsanordnung zur Drehkopplung der Schwenkwelle mit dem Antriebsorgan.

Die vorliegende Erfindung wird nachfolgend mit Bezug auf die beiliegenden Figuren detailliert beschrieben. Es zeigt:
- Fig. 1: eine Abgasklappe für den Abgasstrom einer Brennkraftmaschine;
- Fig. 2: eine perspektivische Ansicht einer Kopplungsanordnung für eine Abgasklappe;
- Fig. 3: eine Seitenansicht der Kopplungsanordnung der Fig. 2;
- Fig. 4: eine Ansicht der Kopplungsanordnung der Fig. 2 in Blickrichtung IV in Fig. 2.

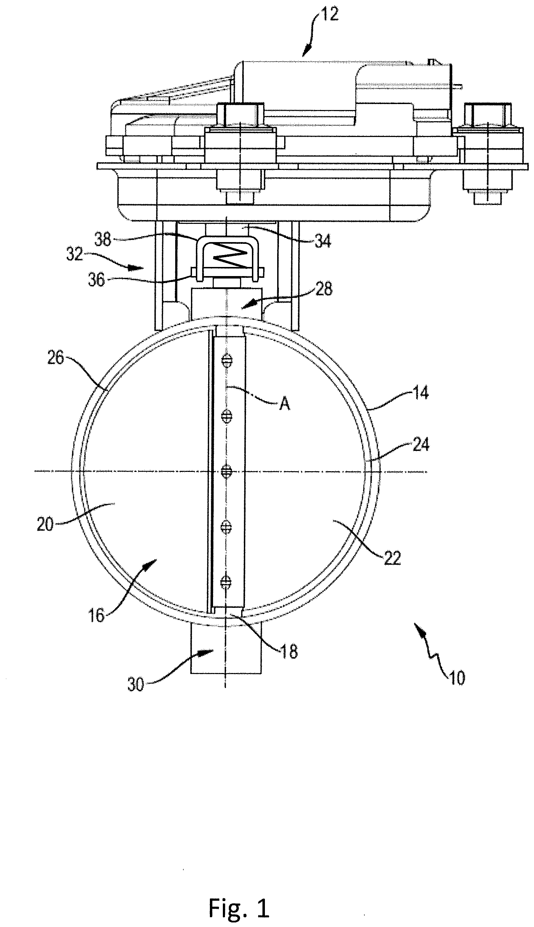

Die Fig. 1 zeigt in Seitenansicht eine allgemein mit 10 bezeichnete und beispielsweise in einer Abgasanlage einer Brennkraftmaschine einsetzbare Abgasklappe mit einem Klappenantrieb 12. Die Abgasklappe 10 umfasst ein Klappenrohr 14, in welchem eine allgemein mit 16 bezeichnete Klappenblende an einer Schwenkwelle 18 um eine Schwenkachse A schwenkbar getragen ist. Die Klappenblende 16 umfasst zwei Klappenflügel 20, 22, welche bei in einer Sperrstellung positionierter Klappenblende 16 an am Innenumfang des Klappenrohrs 14 vorgesehenen Flügelanschlägen 24, 26 anliegen.

Die Schwenkwelle 18 ist an ihren beiden axialen Endbereichen 28, 30 bezüglich des Klappenrohrs 14 vermittels jeweiliger Lageranordnungen um die Schwenkachse A drehbar bzw. schwenkbar getragen. In ihrem ersten axialen Endbereich 28 ist die Schwenkwelle 18 vermittels einer nachfolgend beschriebenen Kopplungsanordnung 32 mit einem Antriebsorgan 34 des Klappenantriebs 12, beispielsweise einer Antriebswelle, zur gemeinsamen Drehung um die Schwenkachse A gekoppelt.

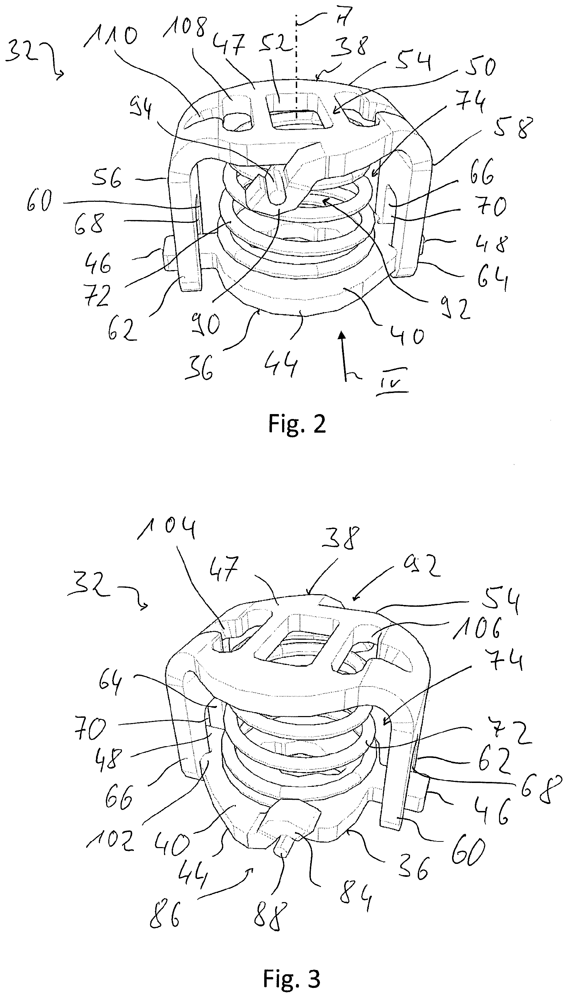

Die Kopplungsanordnung 32 ist in den Fig. 2 bis 4 detailliert dargestellt. Die Kopplungsanordnung 32 umfasst ein an die Schwenkwelle 18 drehfest angekoppeltes erstes Kopplungselement 36 und ein an das Antriebsorgan 34 des Schwenkantriebs 12 drehfest angekoppeltes zweites Kopplungselement 38. Das beispielsweise als Blechteil bereitgestellte erste Kopplungselement 36 umfasst einen plattenartig ausgebildeten Kopplungsbereich 40 mit einer in einem zentralen Bereich ausgebildeten Formschluss-Eingriffsformation 42. Diese ist durch eine Öffnung 43 mit nicht rotationssymmetrischem Öffnungsquerschnitt bereitgestellt, in welche ein entsprechend geformter Abschnitt der Schwenkwelle 18 eingreifend positioniert werden kann. An zwei bezüglich der Schwenkachse einander diametral gegenüberliegend angeordneten Bereichen des Kopplungsbereichs 40 erstrecken sich von einem Außenumfangsbereich 44 desselben zwei Drehkopplungsvorsprünge 46, 48 bezüglich einander diametral nach radial außen.

Das beispielsweise ebenfalls als Blechbauteil bereitgestellte zweite Kopplungselement 38 umfasst einen plattenartigen Kopplungsbereich 47 mit einer in einem zentralen Bereich desselben ausgebildeten Formschluss-Eingriffsformation 50. Auch diese kann eine Öffnung 52 mit bezüglich der Schwenkachse A nicht rotationssymmetrischem Öffnungsquerschnitt aufweisen, in welche ein entsprechend geformter Bereich des Antriebsorgans 34 eingreifend positioniert werden kann. An einem Außenumfangsbereich 54 des plattenartigen Kopplungsbereichs 47 des zweiten Kopplungselements 38 erstrecken sich an bezüglich der Schwenkachse A einander diametral gegenüberliegenden Bereichen Kopplungsarme 56, 58 ausgehend vom Kopplungsbereich 47 im Wesentlichen in Richtung der Schwenkachse A auf das erste Kopplungselement 36 zu. An jedem der beiden Drehkopplungsarme 56, 58 sind zwei sich in Richtung auf das erste Kopplungselement 36 axial zu erstreckende Drehkopplungsfinger 60, 62 bzw. 64, 66 vorgesehen. Die an einem jeweiligen Drehkopplungsarm 56, 58 vorgesehenen Drehkopplungsfinger 60, 62 bzw. 64, 66 begrenzen in Umfangsrichtung zwischen sich jeweils eine Drehkopplungsaussparung 68, 70. Die beiden Drehkopplungsaussparungen sind in Richtung vom Kopplungsbereich 47 des zweiten Kopplungselements 38 weg axial offen, so dass beim Zusammenbau der Kopplungsanordnung 32 das erste Kopplungselement 36 mit seinen beiden Drehkopplungsvorsprüngen 46, 48 in die Drehkopplungsaussparung 68, 70 axial eingeführt werden kann, bis diese zwischen den eine jeweilige Drehkopplungsaussparung 68, 70 begrenzenden Drehkopplungsfingern 60, 62 bzw. 64, 66 in Umfangsrichtung gehalten sind. Es sind am zweiten Kopplungselement 38 jedoch keine das erste Kopplungselement an seiner vom Kopplungsbereich 47 des zweiten Kopplungselements 38 abgewandten Seite hintergreifende und somit einen axialen Formschluss bzw. einen axialen Zusammenhalt der beiden Kopplungselemente 36, 38 erzeugenden Abschnitte vorhanden.

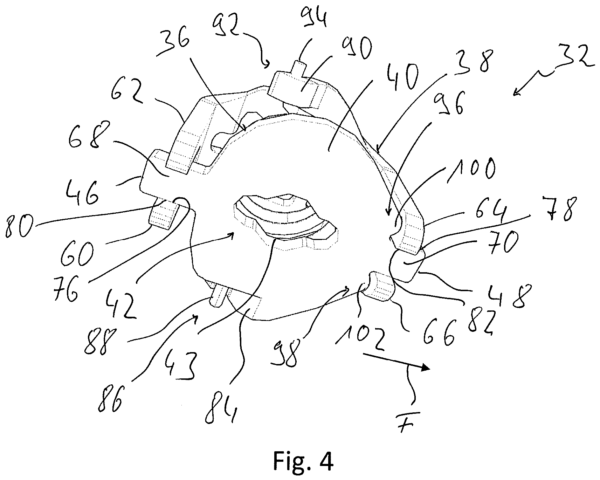

Die Kopplungsanordnung 32 umfasst ferner ein als Vorspannfeder 72, beispielsweise als Schraubenfeder mit mehreren Federwindungen, ausgebildetes Vorspannorgan 74. Die Vorspannfeder 72 ist im Wesentlichen zwischen den beiden Kopplungselementen 36, 38 angeordnet und stützt sich an den einander zugewandten axialen Seiten der Kopplungsbereiche 40, 47 der beiden Kopplungselemente 36, 38 axial ab. Durch dieses Vorspannorgan 74 wird einerseits eine die beiden Kopplungselemente 36, 38 zur Bewegung in Umfangsrichtung bezüglich einander beaufschlagende Umfangskraft erzeugt. In der Darstellung der Fig. 4 beaufschlagt diese Umfangskraft das erste Kopplungselement 36 im Gegenuhrzeigersinn, so dass das erste Kopplungselement 36 mit an den beiden Drehkopplungsvorsprüngen 46, 48 desselben gebildeten Umfangsabstützbereichen 76, 78 in Anlage an an den Drehkopplungsfingern 60 bzw. 64 gebildeten und somit die Drehkopplungsaussparungen 68, 70 in Umfangsrichtung begrenzenden Gegen-Umfangsabstützbereichen 80, 82 vorgespannt sind. Es ist darauf hinzuweisen, dass die Umfangsabstützbereiche 76, 78 bzw. die Gegen-Umfangsabstützbereiche 80, 82 durch in Anlage aneinander bringbare Flächenbereiche der beiden Kopplungselemente 36, 38 bereitgestellt sein können.

Um diese die Kopplungselemente 36, 38 in Umfangsrichtung bezüglich einander beaufschlagende Vorspannkraft zu erzeugen, durch welche die Drehkopplungsvorsprünge 46, 48 in Anlage an den Drehkopplungsfingern 60, 64 vorgespannt sind, weist das erste Kopplungselement 36 am Außenumfangsbereich 44 des Kopplungsbereichs 40 einen durch eine Haltelasche 84 bereitgestellten Haltebereich 86 auf. Die Haltelasche 84 kann beispielsweise durch Abbiegen aus der Ebene des Kopplungsbereichs 40 des ersten Kopplungselements 36 bereitgestellt sein und übergreift einen im Wesentlichen nach radial außen vorstehenden und einen Abstützbereich des Vorspannorgans 74 bereitstellenden Halteschenkel 88 der Vorspannfeder 72 an einer Umfangsseite desselben axial vollständig und an der dem zweiten Kopplungselement 38 zugewandten axialen Seite in Umfangsrichtung im Wesentlichen vollständig. Die Fig. 3 zeigt, dass die Haltelasche 84 den Halteschenkel 88 auch an der anderen Umfangsseite teilweise axial übergreifen kann, um eine in beiden Umfangsrichtungen definierte Halterung des durch einen nach radial außen sich erstreckenden Windungsendbereich der Vorspannfeder 72 bereitgestellten Halteschenkels 88 zu erreichen.

Am zweiten Kopplungselement 38 ist ein gleichermaßen durch eine Haltelasche 90 bereitgestellter Haltebereich 92 für einen Halteschenkel 94 der Vorspannfeder 72 bereitgestellt, welcher durch einen am anderen axialen Ende der Vorspannfeder 72 nach radial außen sich erstreckenden und einen weiteren Abstützbereich des Vorspannorgans 74 bildenden Windungsendbereich bereitgestellt ist. Die Haltelasche 90 übergreift den Halteschenkel 94 axial vollständig und in Umfangsrichtung an der dem ersten Kopplungselement 36 axial zugewandten Seite des Halteschenkels 94. Auch die Haltelasche 90, welche gleichermaßen durch Abbiegen aus der Ebene des Kopplungsbereichs 47 des zweiten Kopplungselements 38 bereitgestellt sein kann, kann den Halteschenkel 94 an der anderen Umfangsseite teilweise axial übergreifen, um auch hier eine in beiden Umfangsrichtungen definierte Positionierung des Halteschenkels 94 zu gewährleisten.

Die beiden Haltebereiche 86, 92 bzw. die Haltelaschen 84, 90 derselben übergreifen die diesen zugeordneten Halteschenkel 88, 94 in zueinander entgegengesetzten axialen Richtungen und Umfangsrichtungen. Somit wird einerseits die Möglichkeit geschaffen, durch vorgespannten Einbau der Vorspannfeder 72 die die beiden Kopplungselemente 36, 38 in Umfangsrichtung bezüglich einander vorspannende Umfangskraft bzw. Tangentialkraft zu erzeugen. Gleichzeitig wird die Möglichkeit geschaffen, die beiden Kopplungselemente 36, 38 vermittels der Vorspannfeder 72 zur Übertragung einer Axialkraft miteinander zu koppeln. Man erkennt, dass die Vorspannfeder 72 in ihren beiden axialen Endbereichen nicht nur vermittels der jeweiligen Haltebereiche 86, 92 mit ihren Halteschenkeln 88, 94 an den Kopplungselementen 36, 38 gehalten ist, sondern mit ihren jeweiligen letzten Windungen an den Kopplungsbereichen 40, 47 derselben axial abgestützt ist. Somit kann bei Bewegung der beiden Kopplungselemente 36, 38 aufeinander zu die Vorspannfeder 72 eine diese in Richtung axial voneinander weg beaufschlagende Axialkraft erzeugen, so dass im Einbauzustand die zwischen der Schwenkwelle 18 und dem Antriebsorgan 34 axial komprimiert gehaltene Kopplungsanordnung 32 eine die Schwenkwelle 18 in Richtung vom Antriebsorgan 34 axial weg beaufschlagende Kraftwirkung erzeugt, wodurch die Schwenkwelle 18 in definierter axialer Positionierung im Klappenrohr 14 gehalten ist.

Dadurch, dass die Halteschenkel 88, 94 durch die diesen jeweils zugeordneten Haltelaschen 84, 90 an der dem jeweils anderen Kopplungselement zugewandten Seite in Umfangsrichtung übergriffen sind, erzeugt die Vorspannfeder 72 auch eine Axialkraft zwischen den beiden Kopplungselementen 36, 38 in Richtung aufeinander zu, wenn auf das Kopplungselement 36 eine diese mit ihren Drehkopplungsvorsprüngen 46, 48 axial aus den zugeordneten Drehkopplungsaussparungen 68, 70 heraus bewegende Kraft einwirkt. In einem in den Fig. 2 bis 4 dargestellten, im Wesentlichen vollständig entspannten Zustand der Vorspannfeder 72 ist das erste Kopplungselement 36 mit seinen Drehkopplungsvorsprüngen 46, 48 in die zugeordneten Drehkopplungsaussparungen 68, 70 eingreifend positioniert und durch die vermittels der Vorspannfeder 72 erzeugte Umfangskraft mit ihren Umfangsabstützbereichen 76, 78 in Anlage an den Gegen-Umfangsabstützbereichen 80, 82 gehalten. Aufgrund der axialen Kraftwirkung der Vorspannfeder 72 wird somit zusätzlich zu der durch den Reibschluss zwischen den aneinander anliegenden Umfangsabstützbereichen 76, 78 und Gegen-Umfangsabstützbereichen 80, 82 eine ein axiales Herausbewegen der Drehkopplungsvorsprünge 46, 48 aus den diese aufnehmenden Drehkopplungsaussparungen 68, 70 verhindernde Axialkraft bereitgestellt. Obgleich die beiden Kopplungselemente 36, 38 aufgrund der axial offenen Drehkopplungsaussparungen 68, 70 somit nicht unmittelbar aneinander axial begrenzt bewegbar gehalten sind, ist mittelbar, nämlich durch die mit den beiden Kopplungselementen 36, 38 verbundene Vorspannfeder 72, eine Verliersicherung für die beiden Kopplungselemente 36, 38 bereitgestellt, welche verhindert, dass die beiden Kopplungselemente 36, 38 vor dem Integrieren in die in Fig. 1 dargestellte Abgasklappe 10 sich voneinander lösen.

Da diese Verliersicherungsfunktion durch die Vorspannfeder 72 bereitgestellt ist, können die die beiden Drehkopplungsvorsprünge 46, 48 aufnehmenden Drehkopplungsaussparungen 68, 70 axial offen ausgebildet werden, was den Zusammenbau der Kopplungsanordnung 32 deutlich vereinfacht. Jedes der beiden Kopplungselemente 36, 38 kann insbesondere im Bereich der Drehkopplungsvorsprünge 46, 48 bzw. der Drehkopplungsarme 56, 58 und der daran vorgesehenen Drehkopplungsfinger 60, 62, 64, 66 vor dem Zusammenfügen mit dem jeweils anderen Kopplungselement in der in den Figuren dargestellten Konfiguration bereitgestellt werden. Es ist beim Zusammenbau der Kopplungsanordnung 32 daher nicht erforderlich, irgendwelche Umformungsmaßnahmen vorzunehmen, um die beiden Drehkopplungsvorsprünge 46, 48 in die diese aufnehmenden Drehkopplungsaussparungen 68, 70 eingreifend positionieren zu können. Es müssen lediglich die beiden Kopplungselemente 36, 38 bei zwischen diesen positionierter Vorspannfeder 72 so bezüglich einander verdreht werden, dass die Drehkopplungsvorsprünge 46, 48 zu den diese aufnehmenden Drehkopplungsaussparungen 68, 70 in Umfangsrichtung ausgerichtet sind, und dann axial aufeinander zu bewegt werden, bis die beiden Drehkopplungsvorsprünge 46, 48 in die Drehkopplungsaussparungen 68, 70 eingreifend positioniert werden. Im Zuge dieser Bewegung kann die Vorspannfeder 72 mit ihren Halteschenkeln 88, 94 sich an den jeweiligen Kopplungsbereichen 40, 47 axial abstützend unter die diesen jeweils zugeordneten Haltelaschen 84, 90 bewegt werden. Ist dieser Zustand erreicht, können diese Haltelaschen 84, 86 mit ihren die zugeordneten Halteschenkel 88, 94 übergreifenden Bereichen wieder geringfügig auf die jeweiligen Kopplungsbereiche 40, 47 zu gebogen werden. Alternativ können die Haltelaschen 84,90 bereits mit der in den Figuren dargestellten Formgebung bereitgestellt werden, und die Vorspannfeder 72 kann durch entsprechende Beaufschlagung der Halteschenkel 88, 94 unter die Haltelaschen 84, 90 bewegt werden.

Durch die Anordnung der Vorspannfeder 72 zwischen den beiden Kopplungselementen 36, 38 in in Umfangsrichtung vorgespanntem Zustand wird nicht nur eine die beiden Kopplungselemente 36, 38 in Umfangsrichtung, also zur Drehung bezüglich einander im Wesentlichen die Schwenkachse A beaufschlagende Kraftwirkung erzeugt, sondern auch eine diese im Wesentlichen radial bzw. quer bezüglich einander beaufschlagende Kraft. In Fig. 4 ist diese näherungsweise radial orientierte Kraft F dargestellt, durch welche das erste Kopplungselement 36 derart belastet wird, dass dieses mit dem Außenumfangsbereich 44 des Kopplungsbereichs 40 in einem dem Drehkopplungsvorsprung 48 nahe liegende Bereich in Richtung auf die Drehkopplungsfinger 64, 66 des zweiten Kopplungselements 38 zu beaufschlagt wird.

Um unter Berücksichtigung dieser Kraft F eine definierte Positionierung der beiden Kopplungselemente 36, 38 quer zur Schwenkachse A bezüglich zueinander zu gewährleisten und insbesondere zu gewährleisten, dass die Öffnungen 43, 52 der Formschluss-Eingriffsformationen 42, 50 bezüglich einander und zur Schwenkwelle A im Wesentlichen zentriert positioniert sind, sind am Außenumfangsbereich 44 des Kopplungsbereichs 40 des ersten Kopplungselements 36 beidseits des Drehkopplungsvorsprungs 48 Radialabstützbereiche 96, 98 vorgesehen. Jeder Radialabstützbereich 96, 98 umfasst einen mit Umfangsabstand zum Drehkopplungsvorsprung 48 vorgesehenen Radialabstützvorsprung 100, 102, mit welchen das erste Kopplungselement 36 an den beidseits des Drehkopplungsvorsprungs 48 positionierten Drehkopplungsfingern 64, 66 nach radial außen abgestützt ist.

Dadurch, dass bei der Kopplungsanordnung 32 das erste Kopplungselement 36 bezüglich des zweiten Kopplungselements 38 nicht nur in Umfangsrichtung durch die aneinander anliegenden bzw. aufeinander zu vorgespannten Umfangsabstützbereiche 76, 78 und Gegen-Umfangsbereiche 80, 82 abgestützt sind, sondern zusätzlich auch eine radiale Abstützung durch einen radial wirkenden Kontakt zwischen den Radialabstützvorsprüngen 100, 102 und den Drehkopplungsfingern 64, 66 erzeugt wird, ist somit auch unterstützt durch die Vorspannwirkung der Vorspannfeder 72 eine definierte Positionierung der beiden Kopplungselemente 36, 38 bezüglich einander quer zur Schwenkachse A gewährleistet. Zwar wird durch den zusätzlichen Kontakt der beiden Kopplungselemente 36, 38 aneinander im Bereich der Radialabstützvorsprünge 100, 102 und der Drehkopplungsfinger 64, 66 ein an sich zu vermeidender zusätzlicher Wärmeübertragungskontakt zwischen den beiden Kopplungselementen 36, 38 eingeführt, doch ist dadurch eine Zwängungen im Schwenkbetrieb vermeidende definierte Positionierung der beiden Kopplungselemente 36, 38 bezüglich einander gewährleistet.

In Zuordnung zu dem anderen Drehkopplungsvorsprung 46 sind keine Radialabstützbereiche bzw. Radialabstützvorsprünge vorgesehen, so dass im Umfangsbereich des Drehkopplungsvorsprungs 46 der Außenumfangsbereich 44 des Kopplungsbereichs 40 einen radialen Abstand zu den Drehkopplungsfingern 60, 62 des zweiten Kopplungselements 38 aufweist. Dadurch wird einerseits ein zu einer zusätzlichen Wärmeübertragung führender Kontakt zwischen den beiden Kopplungselementen 36, 38 in diesem Umfangsbereich vermieden. Andererseits wird keine Überbestimmung in der Positionsdefinierung der beiden Kopplungselemente 36, 38 quer zur Schwenkachse A eingeführt. Es ist eine ausreichend definierte Positionierung allein durch die Radialabstützvorsprünge 100, 102 und die vermittels der Vorspannfeder 72 generierte Kraft F gewährleistet.

Ein weiterer Beitrag zu einem verminderten Wärmeübertrag kann dadurch geleistet werden, dass in dem zweiten Kopplungselement 38 beidseits der im plattenartigen Kopplungsbereich 47 ausgebildeten Öffnung 52 T-förmige Aussparungen 104, 106 gebildet sind, deren T-Balken 108 sich im Wesentlichen entlang der Öffnung 52 im plattenartigen Kopplungsbereich 47 erstreckt, und deren vom jeweiligen T-Balken 108 ausgehender T-Schenkel 110 sich in Richtung von der Öffnung 52 weg aus dem plattenartigen Kopplungsbereich 47 in den Übergangsbereich zu den an den plattenartigen Kopplungsbereich 47 anschließenden Drehkopplungsarmen 56, 58 und beispielsweise auch bis in die Drehkopplungsarme 56, 58 hinein erstrecken. Jede derartige Aussparung 104, 106 trägt insbesondere dann, wenn diese sich durch das Aufbaumaterial des zweiten Kopplungselements 38 vollständig hindurch erstreckt, zu einem deutlich verminderten Wärmeübertragungsquerschnitt bei.

Bei dem vorangehend beschriebenen und in den Figuren dargestellten Aufbau einer Abgasklappe bzw. einer Kopplungsanordnung dafür können verschiedene Aspekte baulich anders ausgeführt sein. So kann beispielsweise ein oder können beide Kopplungselemente mit dem Antriebsorgan bzw. der Schwenkwelle alternativ oder zusätzlich zu dem vorangehend beschriebenen Formschluss auch durch Reibschluss oder/und Materialschluss fest verbunden werden. Selbstverständlich kann die gesamte Kopplungsanordnung in bezüglich der Fig. 1 umgekehrter Anordnung in die Abgasklappe integriert werden, so dass das erste Kopplungselement mit dem Antriebsorgan drehfest verbunden ist und das zweite Kopplungselement mit der Schwenkwelle drehfest verbunden ist. Auch können die am zweiten Kopplungselements vorgesehenen Drehkopplungsaussparungen zwischen jeweiligen über einen größeren Bereich entlang des Außenumfangsbereichs des Kopplungsbereichs des zweiten Kopplungselements sich erstreckenden und axial vom Kopplungsbereich hervorstehenden Wandungsabschnitten begrenzt sein. Im Sinne der vorliegenden Erfindung ist ein einer jeweiligen Drehkopplungsaussparung naheliegender Umfangsendbereich eines derartigen Wandungsabschnitts als Drehkopplungsfinger zu betrachten.

## Patentansprüche

1. Kopplungsanordnung zur Drehkopplung eines Antriebsorgans (34) eines Schwenkantriebs (12) einer Abgasklappe (10) für den Abgasstrom einer Brennkraftmaschine mit einer um eine Schwenkachse (A) drehbaren Schwenkwelle (18), umfassend:
- ein erstes Kopplungselement (36) mit einem mit einer Schwenkwelle (18) zur gemeinsamen Drehung um die Schwenkachse (A) zu koppelnden Kopplungsbereich (40),
- ein zweites Kopplungselement (38) mit einem mit einem Antriebsorgan (34) zur gemeinsamen Drehung um die Schwenkachse (A) zu koppelnden Kopplungsbereich (47),
- ein Vorspannorgan (74) zum Erzeugen einer das erste Kopplungselement (36) und das zweite Kopplungselement (38) im Wesentlichen in Umfangsrichtung bezüglich einander beaufschlagenden Kraft und zum Erzeugen einer in axialer Richtung wirkenden Kraft zwischen dem ersten Kopplungselement (36) und dem zweiten Kopplungselement (38),
wobei ein Kopplungselement von erstem Kopplungselement (36) und zweitem Kopplungselement (38) wenigstens zwei nach radial außen sich erstreckende Drehkopplungsvorsprünge (46, 48) umfasst und das andere Kopplungselement von erstem Kopplungselement (36) und zweitem Kopplungselement(38) in Zuordnung zu jedem Drehkopplungsvorsprung (46, 48) des einen Kopplungselements eine den Drehkopplungsvorsprung (46 48) aufnehmende Drehkopplungsaussparung (68, 70) umfasst, wobei jede Drehkopplungsaussparung (68, 70) axial in Richtung von dem Kopplungsbereich (47) des anderen Kopplungselements weg offen ist, **dadurch gekennzeichnet, dass** das eine Kopplungselement durch das Vorspannorgan (74) gegen Herausbewegen der Drehkopplungsvorsprünge (46, 48) aus den diese aufnehmenden Drehkopplungsaussparungen (68, 70) an dem anderen Kopplungselement axial gehalten ist.

2. Kopplungsanordnung nach Anspruch 1, **dadurch gekennzeichnet, dass** bei axial im Wesentlichen vollständig entspanntem Vorspannorgan (74) die Drehkopplungsvorsprünge (46, 48) in die diesen zugeordneten Drehkopplungsaussparungen (68, 70) eingreifend positioniert sind, oder/und dass an dem einen Kopplungselement zwei bezüglich der Schwenkachse (A) sich im Wesentlichen diametral voneinander weg erstreckende Drehkopplungsvorsprünge (46, 48) vorgesehen sind.

3. Kopplungsanordnung nach Anspruch 1 oder 2, **dadurch gekennzeichnet, dass** die Drehkopplungsvorsprünge (46, 48) sich von dem Kopplungsbereich (40) des einen Kopplungselements nach radial außen erstrecken, oder/und dass der Kopplungsbereich (40) des einen Kopplungselements im Wesentlichen plattenartig ausgebildet ist.

4. Kopplungsanordnung nach einem der vorangehenden Ansprüche, **dadurch gekennzeichnet, dass** an dem anderen Kopplungselement zum Bereitstellen einer jeweiligen Drehkopplungsaussparung (68, 70) zwei in Richtung von dem Kopplungsbereich (47) des anderen Kopplungselements sich im Wesentlichen axial weg erstreckende, eine in Richtung von dem Kopplungsbereich (47) des anderen Kopplungselements weg axial offene Drehkopplungsaussparung (68, 70) zwischen sich begrenzende Drehkopplungsfinger (60, 62, 64, 66) vorgesehen sind.

5. Kopplungsanordnung nach Anspruch 4, **dadurch gekennzeichnet, dass** an dem anderen Kopplungselement zum Bereitstellen einer jeweiligen Drehkopplungsaussparung (68, 70) ein von dem Kopplungsbereich (47) des anderen Kopplungselements sich im Wesentlichen axial weg erstreckender und zwei Drehkopplungsfinger (60, 62, 64, 66) aufweisender Drehkopplungsarm (56, 58) vorgesehen ist, vorzugsweise wobei in dem Kopplungsbereich (47) des anderen Kopplungselements in Zuordnung zu wenigstens einem, vorzugsweise jedem Drehkopplungsarm (56, 58) eine vorzugsweise T-förmige oder/und auf den zugeordneten Drehkopplungsarm (56, 58) sich zu erstreckende Aussparung (104, 106) ausgebildet ist.

6. Kopplungsanordnung nach einem der vorangehenden Ansprüche, **dadurch gekennzeichnet, dass** der Kopplungsbereich (47) des anderen Kopplungselements im Wesentlichen plattenartig ausgebildet ist.

7. Kopplungsanordnung nach einem der vorangehenden Ansprüche, **dadurch gekennzeichnet, dass** das Vorspannorgan (74) eine Vorspannfeder (72) mit einem bezüglich des ersten Kopplungselements (36) wenigstens in einer ersten Umfangsrichtung und wenigstens axial in Richtung auf das zweite Kopplungselement (38) zu abgestützten ersten Abstützbereich und einem bezüglich des zweiten Kopplungselements (38) wenigstens in einer der ersten Umfangsrichtung entgegengesetzten zweiten Umfangsrichtung und wenigstens axial in Richtung auf das erste Kopplungselement (36) zu abgestützten zweiten Abstützbereich umfasst.

8. Kopplungsanordnung nach Anspruch 7, **dadurch gekennzeichnet, dass** der erste Abstützbereich einen von einem Haltebereich (86) des ersten Kopplungselements (36) axial und in Umfangsrichtung übergriffenen Halteschenkel (88) der Vorspannfeder (72) umfasst, oder/und dass der zweite Abstützbereich eine von einem Haltebereich (92) des zweiten Kopplungselements (38) axial und in Umfangsrichtung übergriffenen Halteschenkel (94) der Vorspannfeder (72) umfasst.

9. Kopplungsanordnung nach Anspruch 8, **dadurch gekennzeichnet, dass** der Haltebereich (86) des ersten Kopplungselements (36) an einem Außenumfangsbereich (44) des Kopplungsbereichs (40) des ersten Kopplungselements (36) eine axial und in Umfangsrichtung abgekrümmt sich erstreckende Haltelasche (84) umfasst, oder/und dass der Haltebereich (92) des Kopplungsbereichs (47) des zweiten Kopplungselements (38) an einem Außenumfangsbereich (54) des Kopplungsbereichs (47) des zweiten Kopplungselements (38) eine axial und in Umfangsrichtung abgekrümmt sich erstreckende Haltelasche (90) umfasst.

10. Kopplungsanordnung nach Anspruch 9, **dadurch gekennzeichnet, dass** die Haltelasche (84) am Kopplungsbereich (40) des ersten Kopplungselements (36) axial und in Umfangsrichtung im Wesentlichen entgegengesetzt zur Haltelasche (90) am Kopplungsbereich (47) des zweiten Kopplungselements (38) abgekrümmt ist.

11. Kopplungsanordnung nach einem der Ansprüche 8-10, **dadurch gekennzeichnet, dass** die Vorspannfeder (72) eine Schraubenfeder ist, und dass jeder Halteschenkel (88, 94) durch einen im Wesentlichen nach radial außen sich erstreckenden Windungsendbereich der Vorspannfeder (72) bereitgestellt ist.

12. Kopplungsanordnung nach einem der vorangehenden Ansprüche, **dadurch gekennzeichnet, dass** an jedem Drehkopplungsvorsprung (46, 48) ein Umfangsabstützbereich (76, 78) vorgesehen ist, und dass jede Drehkopplungsaussparung (68, 70) in Umfangsrichtung durch einen Gegen-Umfangsabstützbereich (80, 82) begrenzt ist, wobei der Umfangsabstützbereich (76, 78) jedes in einer Drehkopplungsaussparung (68, 70) aufgenommenen Drehkopplungsvorsprungs (46, 48) durch das Vorspannorgan (74) in Anlage an dem Gegen-Umfangsabstützbereich (80, 82) der einen jeweiligen Drehkopplungsvorsprung (46, 48) aufnehmenden Drehkopplungsaussparung (68, 70) vorgespannt ist.

13. Kopplungsanordnung nach einem der vorangehenden Ansprüche, **dadurch gekennzeichnet, dass** an dem anderen Kopplungselement in Zuordnung zu wenigstens einem Drehkopplungsvorsprung (48) in Umfangsrichtung an wenigstens einer Seite des Drehkopplungsvorsprungs (48) ein das eine Kopplungselement im Wesentlichen radial bezüglich des anderen Kopplungselements abstützender Radialabstützbereich (96, 98) vorgesehen ist.

14. Kopplungsanordnung nach einem der vorangehenden Ansprüche, **dadurch gekennzeichnet, dass** der Kopplungsbereich (40) des ersten Kopplungselements (36) eine Formschluss-Eingriffsformation (42) zur Drehkopplung mit der Schwenkwelle (18) aufweist, oder/und dass der Kopplungsbereich (47) des zweiten Kopplungselements (38) eine Formschluss-Eingriffsformation (50) zur Drehkopplung mit dem Antriebsorgan (34) aufweist.

15. Abgasklappe, insbesondere für den Abgasstrom einer Brennkraftmaschine, umfassend eine im Inneren eines Klappenrohrs (14) an einer um eine Schwenkachse (A) drehbaren Schwenkwelle (18) getragene Klappenblende (16) sowie einen Schwenkantrieb (34) mit einem Antriebsorgan (34), ferner umfassend eine Kopplungsanordnung (32) nach einem der vorangehenden Ansprüche zur Drehkopplung der Schwenkwelle (18) mit dem Antriebsorgan (34).

## Claims

1. A coupling arrangement for the rotational coupling of a drive element (34) of a pivoting drive (12) of an exhaust-gas flap (10) for the exhaust-gas flow of an internal combustion engine to a pivot shaft (18) that is rotatable about a pivot axis (A), comprising:
- a first coupling element (36) having a coupling region (40) which is to be coupled to a pivot shaft (18) for conjoint rotation about the pivot axis (A),
- a second coupling element (38) having a coupling region (47) which is to be coupled to a drive element (34) for conjoint rotation about the pivot axis (A),
- a preload element (74) for generating a force which acts on the first coupling element (36) and the second coupling element (38) substantially in a peripheral direction with respect to one another and for generating a force which acts in an axial direction between the first coupling element (36) and the second coupling element (38),
wherein one coupling element of the first coupling element (36) and the second coupling element (38) comprises at least two radially outwardly extending rotational coupling projections (46, 48), and the other coupling element of the first coupling element (36) and the second coupling element (38) comprises, in association to each rotational coupling projection (46, 48) of the one coupling element, a rotational coupling cutout (68, 70) which receives the rotational coupling projection (46, 48), wherein each rotational coupling cutout (68, 70) is open axially in the direction away from the coupling region (47) of the other coupling element, **characterized in that** the one coupling element is held axially on the other coupling element by the preload element (74) so as to prevent the rotational coupling projections (46, 48) from moving out of the rotational coupling cutouts (68, 70) that receive them.

2. The coupling arrangement as claimed in claim 1, **characterized in that** when the preload element (74) is in a substantially completely axially relaxed state, the rotational coupling projections (46, 48) are positioned so as to engage into the rotational coupling cutouts (68, 70) assigned thereto, or/and **in that** two rotational coupling projections (46, 48) which extend away from one another in a substantially diametrically opposed manner with respect to the pivot axis (A) are provided on the one coupling element.

3. The coupling arrangement as claimed in claim 1 or 2, **characterized in that** the rotational coupling projections (46, 48) extend radially outward from the coupling region (40) of the one coupling element, or/and **in that** the coupling region (40) of the one coupling element is of substantially plate-like form.

4. The coupling arrangement as claimed in one of the preceding claims, **characterized in that** two rotational coupling fingers (60, 62, 64, 66) which extend substantially axially in the direction away from the coupling region (47) of the other coupling element and which delimit between them a rotational coupling cutout (68, 70) that is open axially in the direction away from the coupling region (47) of the other coupling element are provided on the other coupling element for the purpose of providing a respective rotational coupling cutout (68, 70).

5. The coupling arrangement as claimed in claim 4, **characterized in that** a rotational coupling arm (56, 58) which extends substantially axially away from the coupling region (47) of the other coupling element and which has two rotational coupling fingers (60, 62, 64, 66) is provided on the other coupling element for the purpose of providing a respective rotational coupling cutout (68, 70), preferably wherein a cutout (104, 106) which is preferably T-shaped or/and which extends in the direction of the assigned rotational coupling arm (56, 58) is formed in the coupling region (47) of the other coupling element so as to be assigned to at least one, preferably each, rotational coupling arm (56, 58).

6. The coupling arrangement as claimed in one of the preceding claims, **characterized in that** the coupling region (47) of the other coupling element is of substantially plate-like form.

7. The coupling arrangement as claimed in one of the preceding claims, **characterized in that** the preload element (74) comprises a preload spring (72) having a first support region which is supported at least in a first peripheral direction with respect to the first coupling element (36) and at least axially in the direction of the second coupling element (38), and having a second support region which is supported at least in a second peripheral direction, opposite to the first peripheral direction, with respect to the second coupling element (38) and at least axially in the direction of the first coupling element (36).

8. The coupling arrangement as claimed in claim 7, **characterized in that** the first support region comprises a holding limb (88), which is engaged over axially and in the peripheral direction by a holding region (86) of the first coupling element (36), of the preload spring (72), or/and **in that** the second support region comprises a holding limb (94), which is engaged over axially and in the peripheral direction by a holding region (92) of the second coupling element (38), of the preload spring (72).

9. The coupling arrangement as claimed in claim 8, **characterized in that** the holding region (86) of the first coupling element (36) comprises, on an outer peripheral region (44) of the coupling region (40) of the first coupling element (36), a holding lug (84) which extends in a curved manner axially and in the peripheral direction, or/and **in that** the holding region (92) of the coupling region (47) of the second coupling element (38) comprises, on an outer peripheral region (54) of the coupling region (47) of the second coupling element (38), a holding lug (90) which extends in a curved manner axially and in the peripheral direction.

10. The coupling arrangement as claimed in claim 9, **characterized in that** the holding lug (84) on the coupling region (40) of the first coupling element (36) is curved axially and in the peripheral direction in a manner substantially opposite to the holding lug (90) on the coupling region (47) of the second coupling element (38).

11. The coupling arrangement as claimed in one of claims 8-10, **characterized in that** the preload spring (72) is a helical spring, and **in that** each holding limb (88, 94) is provided by a substantially radially outwardly extending winding end region of the preload spring (72).

12. The coupling arrangement as claimed in one of the preceding claims, **characterized in that** a peripheral support region (76, 78) is provided on each rotational coupling projection (46, 48), and **in that** each rotational coupling cutout (68, 70) is delimited in the peripheral direction by a counterpart peripheral support region (80, 82), wherein the peripheral support region (76, 78) of each rotational coupling projection (46, 48) received in a rotational coupling cutout (68, 70) is preloaded by the preload element (74) so as to abut against the counterpart peripheral support region (80, 82) of the rotational coupling cutout (68, 70) receiving a respective rotational coupling projection (46, 48).

13. The coupling arrangement as claimed in one of the preceding claims, **characterized in that** a radial support region (96, 98) which substantially radially supports the one coupling element with respect to the other coupling element is provided on the other coupling element so as to be assigned to at least one rotational coupling projection (48), in the peripheral direction, on at least one side of the rotational coupling projection (48).

14. The coupling arrangement as claimed in one of the preceding claims, **characterized in that** the coupling region (40) of the first coupling element (36) has a positively locking engagement formation (42) for rotational coupling to the pivot shaft (18), or/and **in that** the coupling region (47) of the second coupling element (38) has a positively locking engagement formation (50) for rotational coupling to the drive element (34).

15. An exhaust-gas flap, in particular for the exhaust-gas flow of an internal combustion engine, comprising a flap plate (16) which is supported, in the interior of a flap pipe (14), on a pivot shaft (18) that is rotatable about a pivot axis (A), and also a pivoting drive (12) with a drive element (34), further comprising a coupling arrangement (32) as claimed in one of the preceding claims for the rotational coupling of the pivot shaft (18) to the drive element (34).

## Revendications

1. Un dispositif d'accouplement pour l'accouplement rotatif d'un élément d'entraînement (34) d'un entraînement pivotant (12) d'un clapet de gaz d'échappement (10) pour le flux de gaz d'échappement d'un moteur à combustion interne à un arbre pivot (18) qui est rotatif autour d'un axe de pivotement (A), comprenant :
- un premier élément d'accouplement (36) comportant une zone d'accouplement (40) qui doit être accouplée à un arbre pivot (18) pour une rotation conjointe autour de l'axe de pivotement (A),
- un deuxième élément d'accouplement (38) comportant une zone d'accouplement (47) qui doit être couplée à un élément d'entraînement (34) pour une rotation conjointe autour de l'axe de pivotement (A),
- un élément de précontrainte (74) pour générer une force qui agit sur le premier élément d'accouplement (36) et le deuxième élément d'accouplement (38) essentiellement dans une direction périphérique l'un par rapport à l'autre et pour générer une force qui agit dans une direction axiale entre le premier élément d'accouplement (36) et le deuxième élément d'accouplement (38),
dans lequel un élément d'accouplement du premier élément d'accouplement (36) et du deuxième élément d'accouplement (38) comprend au moins deux saillies d'accouplement rotatif (46, 48) s'étendant radialement vers l'extérieur, et l'autre élément d'accouplement du premier élément d'accouplement (36) et du deuxième élément d'accouplement (38) comprend, en association à chaque saillie d'accouplement rotatif (46, 48) de l'élément d'accouplement, une découpe d'accouplement rotatif (68, 70) qui reçoit la saillie d'accouplement rotatif (46, 48), dans lequel chaque découpe d'accouplement rotatif (68, 70) est ouverte axialement dans la direction opposée à la zone d'accouplement (47) de l'autre élément d'accouplement,
**caractérisé en ce que** l'un élément d'accouplement est maintenu axialement sur l'autre élément d'accouplement par l'élément de précontrainte (74) de manière à empêcher les saillies d'accouplement rotatif (46, 48) de sortir des découpes d'accouplement rotatif (68, 70) qui les ont accueillies.

2. Le dispositif d'accouplement selon la revendication 1, **caractérisé en ce que,** lorsque l'élément de précontrainte (74) est dans un état de relâchement axial pratiquement complet, les saillies d'accouplement rotatif (46, 48) sont positionnées de manière à s'engager dans les découpes d'accouplement rotatif (68, 70) qui leur sont affectées, ou/et **en ce que** deux saillies d'accouplement rotatif (46, 48) qui s'étendent à l'écart l'une de l'autre de manière essentiellement diamétralement opposée par rapport à l'axe de pivotement (A) sont prévues sur ledit élément d'accouplement.

3. Le dispositif d'accouplement selon la revendication 1 ou 2, **caractérisé en ce que** les saillies d'accouplement rotatif (46, 48) s'étendent radialement vers l'extérieur de la zone d'accouplement (40) dudit élément d'accouplement, ou/et **en ce que** la zone d'accouplement (40) dudit élément d'accouplement a essentiellement la forme d'une plaque.

4. Le dispositif d'accouplement selon l'une des revendications précédentes, **caractérisé en ce que** deux doigts d'accouplement rotatif (60, 62, 64, 66) qui s'étendent essentiellement axialement dans la direction opposée à la zone d'accouplement (47) de l'autre élément d'accouplement et qui délimitent entre eux une découpe d'accouplement rotatif (68, 70) ouverte axialement dans la direction opposée à la zone d'accouplement (47) de l'autre élément d'accouplement sont prévus sur l'autre élément d'accouplement afin de fournir une découpe d'accouplement rotatif respective (68, 70).

5. Le dispositif d'accouplement selon la revendication 4, **caractérisé en ce que** un bras d'accouplement rotatif (56, 58) qui s'étend essentiellement axialement à l'écart de la zone d'accouplement (47) de l'autre élément d'accouplement et qui comporte deux doigts d'accouplement rotatif (60, 62, 64, 66) est prévu sur l'autre élément d'accouplement dans le but de fournir une découpe d'accouplement rotatif respective (68, 70), dans lequel de préférence une découpe (104, 106) qui est de préférence en forme de T ou/et qui s'étend dans la direction du bras d'accouplement rotatif (56, 58) attribué est formée dans la zone d'accouplement (47) de l'autre élément d'accouplement afin d'être attribuée à au moins un, de préférence chaque, bras d'accouplement rotatif (56, 58).

6. Le dispositif d'accouplement selon l'une des revendications précédentes, **caractérisé en ce que** la zone d'accouplement (47) de l'autre élément d'accouplement se présente sous la forme d'une plaque.

7. Le dispositif d'accouplement selon l'une des revendications précédentes, **caractérisé en ce que** l'élément de précontrainte (74) comprend un ressort de précontrainte (72) ayant une première zone de support qui est soutenue au moins dans une première direction périphérique par rapport au premier élément d'accouplement (36) et au moins axialement dans la direction du deuxième élément d'accouplement (38), et ayant une deuxième zone de support qui est soutenue au moins dans une deuxième direction périphérique, opposée à la première direction périphérique, par rapport au deuxième élément d'accouplement (38) et au moins axialement dans la direction du premier élément d'accouplement (36).

8. Le dispositif d'accouplement selon la revendication 7, **caractérisé en ce que** la première zone de support comprend une branche de maintien (88), qui est engagée axialement et dans la direction périphérique par une zone de maintien (86) du premier élément d'accouplement (36), du ressort de précontrainte (72), ou/et **en ce que** la deuxième zone de support comprend une branche de maintien (94), qui est engagée axialement et dans la direction périphérique par une zone de maintien (92) du deuxième élément d'accouplement (38), du ressort de précontrainte (72).

9. Le dispositif d'accouplement selon la revendication 8, **caractérisé en ce que** la zone de maintien (86) du premier élément d'accouplement (36) comprend, sur une zone périphérique extérieure (44) de la zone d'accouplement (40) du premier élément d'accouplement (36), une patte de maintien (84) qui s'étend de manière incurvée dans la direction axiale et dans la direction périphérique, ou/et **en ce que** la zone de maintien (92) de la zone d'accouplement (47) du deuxième élément d'accouplement (38) comprend, sur une zone périphérique extérieure (54) de la zone d'accouplement (47) du deuxième élément d'accouplement (38), une patte de maintien (90) qui s'étend de manière incurvée dans la direction axiale et dans la direction périphérique.

10. Le dispositif d'accouplement selon la revendication 9, **caractérisé en ce que** la patte de maintien (84) sur la zone d'accouplement (40) du premier élément d'accouplement (36) est incurvée axialement et dans la direction périphérique d'une manière essentiellement opposée à la patte de maintien (90) sur la zone d'accouplement (47) du deuxième élément d'accouplement (38).

11. Le dispositif d'accouplement selon l'une des revendications 8 à 10, **caractérisé en ce que** le ressort de précontrainte (72) est un ressort hélicoïdal, et **en ce que** chaque branche de maintien (88, 94) est fournie par une zone d'extrémité d'enroulement du ressort de précontrainte (72) s'étendant essentiellement radialement vers l'extérieur.

12. Le dispositif d'accouplement selon l'une des revendications précédentes, **caractérisé en ce que** une zone de support périphérique (76, 78) est prévue sur chaque saillie d'accouplement rotatif (46, 48), et **en ce que** chaque découpe d'accouplement rotatif (68, 70) est délimitée dans la direction périphérique par une zone de support périphérique homologue (80, 82), la zone de support périphérique (76, 78) de chaque saillie d'accouplement rotatif (46, 48) reçue dans une découpe d'accouplement rotatif (68, 70) étant précontrainte par l'élément de précontrainte (74) de manière à buter contre la zone de support périphérique homologue (80, 82) de la découpe d'accouplement rotatif (68, 70) recevant une saillie d'accouplement rotatif respective (46, 48).

13. Le dispositif d'accouplement selon l'une des revendications précédentes, **caractérisé en ce qu'**une zone de support radiale (96, 98), qui soutient radialement l'un des éléments d'accouplement par rapport à l'autre, est prévue sur l'autre élément d'accouplement de manière à être associée à au moins une saillie d'accouplement rotatif (48), dans la direction périphérique, sur au moins un côté de la saillie d'accouplement rotatif (48).

14. Le dispositif d'accouplement selon l'une des revendications précédentes, **caractérisé en ce que** la zone d'accouplement (40) du premier élément d'accouplement (36) présente une formation d'engagement à verrouillage positif (42) pour l'accouplement rotatif à l'arbre pivot (18), ou/et **en ce que** la zone d'accouplement (47) du deuxième élément d'accouplement (38) présente une formation d'engagement à verrouillage positif (50) pour l'accouplement rotatif à l'élément d'entraînement (34).

15. Un clapet de gaz d'échappement, en particulier pour l'écoulement des gaz d'échappement d'un moteur à combustion interne, comprenant une plaque de clapet (16) qui est supportée, à l'intérieur d'un tuyau de clapet (14), sur un arbre pivot (18) qui est rotatif autour d'un axe de pivotement (A), et également un entraînement pivotant (12) avec un élément d'entraînement (34), comprenant en outre un dispositif d'accouplement (32) selon l'une des revendications précédentes pour l'accouplement rotatif de l'arbre pivot (18) à l'élément d'entraînement (34).
